# EUROPEAN PATENT APPLICATION

(11) **EP 0 844 709 A2**
(43) Date of publication of application: **27.05.1998**
(21) Application number: 97870190.2
(22) Date of filing: 25.11.1997
(51) Int. Cl.: H02B 1/38, H02B 1/16

(54) **Cabinet for electrical equipment**

(30) Priority: 26.11.1996 BE 9600988
(71) Applicant: Alcatel Cabling Systems S.A./N.V., 1070 Brussels (BE)
(72) Inventor: De Win, Paul, 1654 Beersel (BE)
(74) Representative: Quintelier, Claude

(57) **Abstract**

The present invention relates to a cabinet for electrical equipment comprising : a frame, provided for carrying said electrical equipment; a housing, comprising a bottom unit, a top unit and side walls, at least one of which side walls forming a door and the other side walls forming panels, which bottom unit and top unit are provided for being mounted on the frame, which door comprises two opposite longitudinal sides, one longitudinal side being provided with hinge means and the other longitudinal side with closure means. According to the invention said hinge means comprise a first, respectively a second bar, which are provided for meshing in a notch provided in the bottom respectively in the top unit. Further are said frame, housing and bars, electrically conductive and at least one of said longitudinal sides of at least one of said side walls is provided with at least one earth clip, which earth clip is provided for achieving an electrical contact with one of said bars, which on his turn is provided for achieving a further electrical contact with one of the units, bottom or top unit.

## Description

The present invention relates to a cabinet for electrical equipment comprising a frame, provided for carrying said electrical equipment; a housing comprising a bottom unit, a top unit and side walls, at least one of which side walls forming a door and the other side walls forming panels, which bottom unit and top unit are provided for being mounted on the frame, which door comprises two opposite longitudinal sides, one longitudinal side being provided with hinge means and the other longitudinal side with closure means.

Such a cabinet is amongst others known from Keith Reynolds "Earthing for safety & performance", Design Engineering October 1995, LONDON, GB, pages 93-94 (ref. XP002037297) wherein earth wires are applied between the side walls and the frame, in order to earth the cabinet.

A drawback of the known cabinet is that both the applying of the earth wires upon mounting as the releasing of the earth wires upon disassembling, are relatively time consuming.

The object of the invention is to realise a cabinet wherein earthing can be performed in a more simple and at the same time quicker manner.

In order to achieve this object, a cabinet according to the invention is characterised in that said hinge means comprise a first, respectively a second bar, which are provided for meshing in a notch provided in the bottom respectively in the top unit, that said frame, housing and bars, are electrically conductive and that at least one of said longitudinal sides of at least one of said side walls is provided with at least one earth clip, which earth clip is provided for achieving an electrical contact with one of said bars, which on his turn is provided for achieving a further electrical contact with one of the units, bottom or top unit.

By gripping a bar from a side wall on such an earth clip, there is provided that this side wall is electrically connected with the bar. The bar is on his turn electrically connected with one of the units, bottom or top unit. Since the bottom, respectively the top unit are mounted on the frame, the bottom respectively the top unit are electrically connected herewith. Consequently the side wall is electrically connected with the frame. In this way, it is possible to earth all the side walls of the cabinet which are equipped with hinge means according to the invention in a very simple an reliable manner.

Preferably said bottom respectively said top unit are equipped with a further earth clip in order to achieve said further electrical contact. This ensures a good electrical contact between the bars on the one hand and the bottom respectively the top element on the other hand.

In particular, at least one of said hinge and closure means comprises a closure element, which closure element comprises two opposite connection points, wherein the one connection point is hingedly connected with a first extremity of a first bar and the other connection point is hingedly connected with a first extremity of a second bar, which bars extend with respect to said closure element in an essentially opposite direction and are movable by means of said closure element between a first and a second position, wherein the second extremity of said first respectively second bar is provided for meshing in said first position in a notch provided in the bottom respectively the top unit and in said second position for being removed from the respective notch. This facilitates installing the door by simply bringing the bars in the first position.

According to a preferred embodiment of the cabinet according to the invention, said closure element comprises anchoring means for anchoring the bars in said first position. In particular said closure element comprises a connection piece which comprises said opposite connection points and said anchoring means comprise a coupling piece and a control element, wherein said coupling piece is provided for coupling respectively uncoupling the control element to/from said connection piece. By anchoring the bars, which are used as hinge means, in the first position, the direction of rotation of the door is established. For the panels this preferred embodiment provides the advantage that upon anchoring the bars in the first position at both lateral sides by uncoupling in particular the connection piece, an unwanted opening of the panel is avoided. If one wishes to open the panel, then in particular the control element provided on one of the longitudinal sides of the panel, must be coupled to the connection piece in order to allow positioning the bars in the opened position. If one wishes to disassemble the panel from the cabinet, then in particular the control elements provided on both longitudinal sides of the panel must be coupled to their respective connection pieces to allow positioning of the bars at both longitudinal sides in the opened position.

According to a further preferred embodiment of the cabinet according to the invention, the coupling piece and the control element are equipped with teeth which are provided for meshing into one another upon said uncoupling. By meshing the teeth into one another, release of the coupling piece from the control element is avoided.

The invention will now be described in detail referring to the figures showing a preferred embodiment of the invention.

Figure 1 shows a perspective view of the cabinet according to the invention.

Figure 2 shows a perspective view of a side wall of the cabinet.

Figure 3 shows an exploded perspective view of the bars and the closure element.

Figure 4 shows a perspective view of the bars and the closure element of figure 3, in mounted position.

Figure 5 illustrates the bars in the first position.

Figure 6 illustrates the bars in the second position.

Figure 7 shows a perspective view of the connection piece of the closure element according to figures 3 and 4.

Figure 8 shows a perspective view of the control element of the closure element according to figure 3 and 4.

Figure 9 shows a perspective view of the coupling piece of the closure element according to figures 3 and 4.

Figure 10 shows a perspective view of a doorknob which can be releasably mounted on the control element illustrated in figure 8.

Figure 11 shows a perspective view of the earth clip, provided at the height of a corner of a longitudinal side of a side wall.

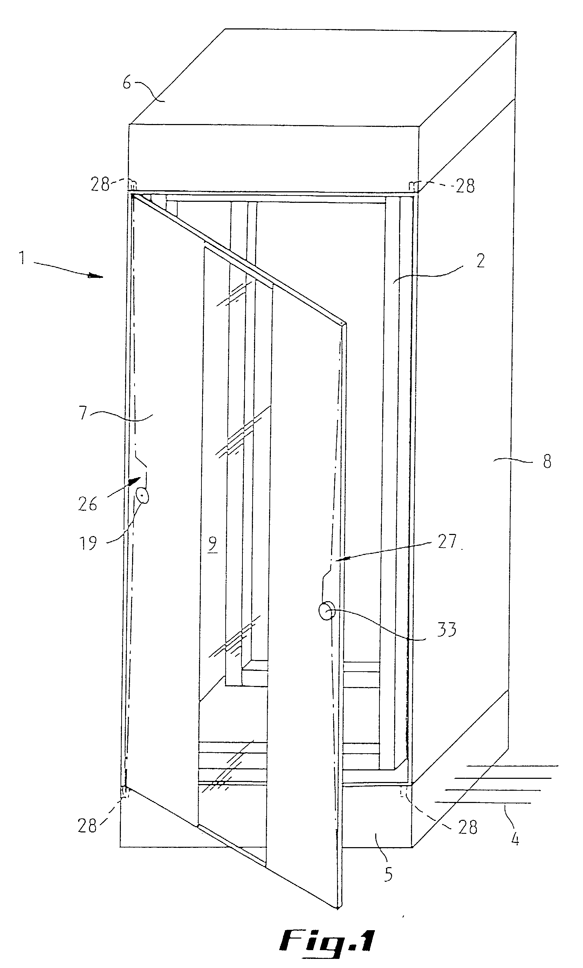

As illustrated in figure 1, the invention relates to a cabinet 1 for electrical equipment. Electrical equipment may comprise all kinds of electric and electronic apparatuses and accessories. The cabinet 1 comprises a frame 2 which is provided for comprising the electrical equipment. The electrical equipment is connected by means of cables 4. The cabinet further comprises a housing with a bottom unit 5, a top unit 6 and side walls 7, 8. The bottom unit 5 and the top unit 6 are both mounted on the frame 2. This mounting is performed in a known manner, for example by making use of bolts. In the shown embodiment side wall 7 forms a door and the remaining side walls 8 a panel. Generally, at least one of the side walls forms a door and the other side walls each a panel. The door is preferably provided with a transparent plate 9 enabling to look from the outside into the cabinet.

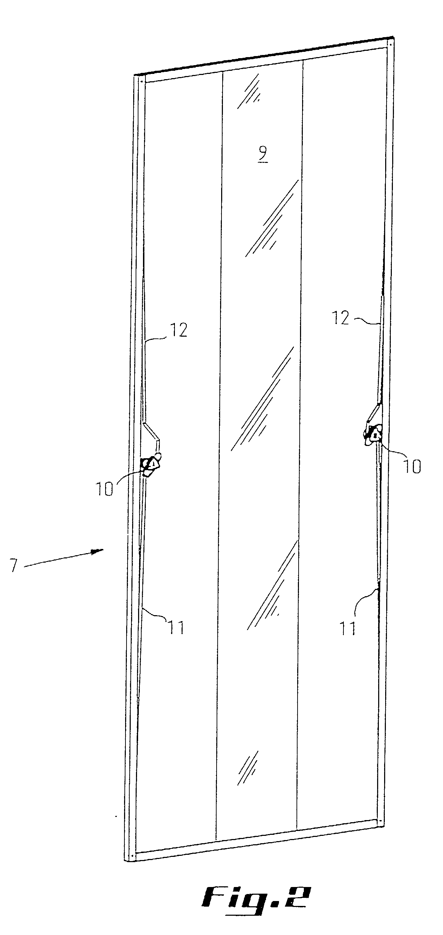

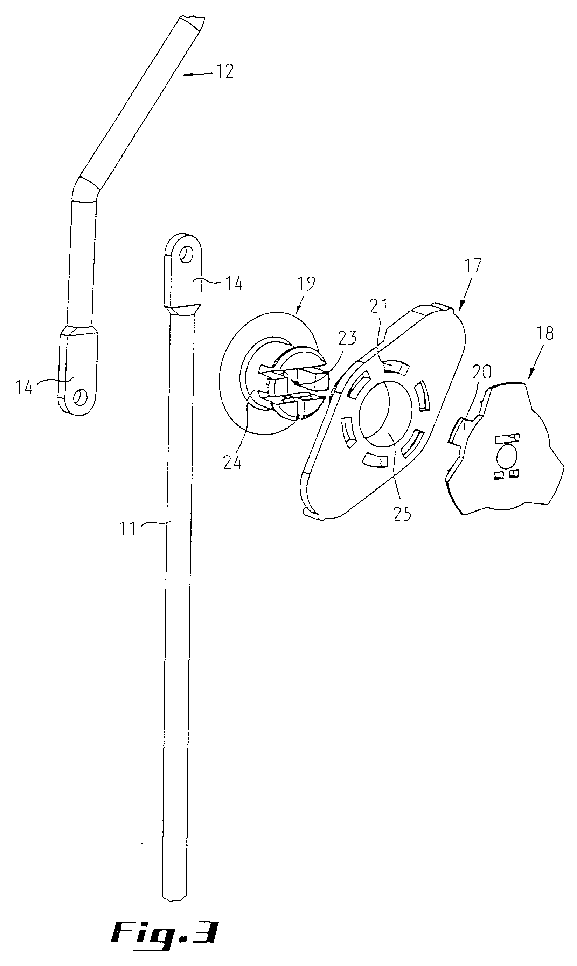

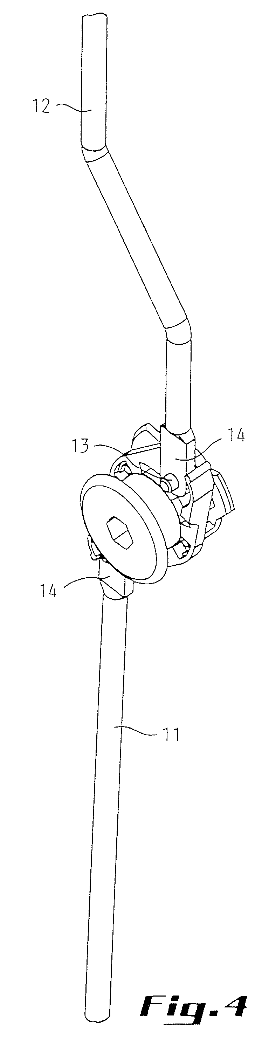

As shown in the figures, the door 7 comprises at the height of both lateral sides, hinge means 26 and closure means 27, which are in particular manufactured in the same manner. Both the hinge and the closure means comprise preferably each a closure element 10 (figure 2). The closure element 10 comprises two opposite connection points 13 (figure 4), one of the connection points being hingedly connected with a first extremity 14 of a first bar 11 and the other connection point being connected with a first extremity 14 of a second bar 12. More details concerning the structure of the closure element are described further.

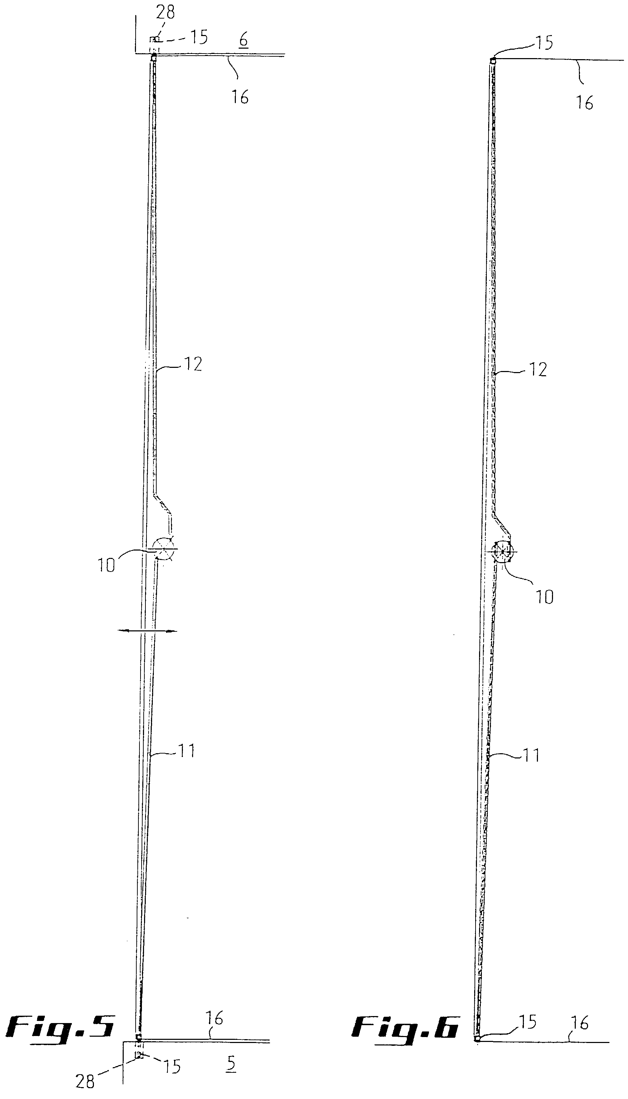

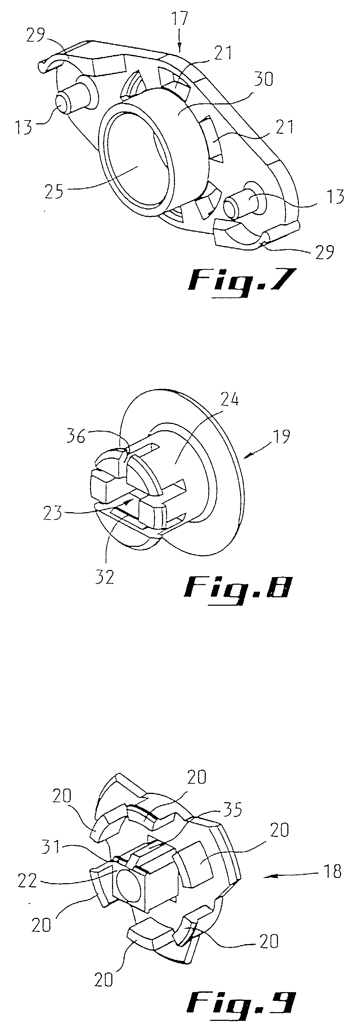

As shown in figures 5 and 6, the first and second bars 11, 12, extend in essentially opposite direction. By turning said closure element, the bars are moved between a first position shown in figure 5 and a second position shown in figure 6. In the first position the second extremities 15 of the bars 11 and 12 extend out of the borders 16 and are provided for pivotally meshing in respective notches provided in the bottom unit 5 and the top unit 6 (shown in figure 5). In the second position the second extremities of the bars 15 are positioned within the borders 16, and are provided for being removed from the notches. The notches are for example formed by holes 28 in the bottom and the top unit which diameter corresponds essentially to the diameter of the bars.

There is assumed that the bottom and the top unit are mounted on the frame 2 in a known manner. The door 7, provided with hinge and closure means according to the invention, is mounted as follows. The bars 11, 12 at both longitudinal sides of the door, are positioned in said second position. After this, the door is placed in such a manner that the second extremities of the bars are positioned at one of the longitudinal sides of the door, at the height of the respective notches in the bottom and the top unit. In a further step the closure element 10 is turned for moving these bars 11, 12 from the second to the first position. Since the second extremities 15 of these bars in this first position are pivotally meshing in respective notches, these bars form hinge means for the door. In a further step, the door is turned until the second extremities 15 of the bars on the other longitudinal side of the door are positioned at the height of the respective notches in the bottom and the top unit. When the bars are moved to the first position with the door in this position, the door is closed. For opening the door, the bars of the other longitudinal side are brought in the second position. If one wishes to modify the rotating direction of the door, then the bars of the other longitudinal side are kept in the first position and the bars of the one longitudinal side are moved between the first and second position for opening and closing the door. For disassembling the door, it is sufficient to position the bars of both longitudinal sides in the second position, in such a manner that the second extremities 15 from all bars are removed from their respective notches.

The same hinge and closure means are preferably also provided in the same manner on at least one of the panels 8. The panels can then be mounted easily in the same manner, wherein the mounted position of the panels corresponds to the closed position of the door. When a cable must be replaced, then one of the panels is opened in the same manner as a door must be opened, i.e. the second extremities of the bars on one longitudinal side of the panel are moved to the second position by means of the closure element. Another solution consists in that the second extremities of the bars on both longitudinal sides of the panel are moved to the second position for disassembling the panel entirely from the cabinet. This other solution may sometimes be necessary in case there is not sufficient place for opening the panel in the same manner as a door. Such panels consequently also form doors.

Figure 3 illustrates in an exploded view the closure element with a part of the bars according to a preferred embodiment of the invention. Figure 4 illustrates a detail of the closure element with a part of the bars in the mounted position. This closure element comprises a connection piece 17, also illustrated in figure 7, onto which said connection points 13 are provided. In such a manner the bars are hingedly connected to the connection piece. The closure element further comprises a control element 19 (figure 8), which is applied on the outer side of the door (figure 1), and a coupling piece 18 (figure 9), which is provided at the inner side of the door. The coupling piece 18 is provided for coupling and uncoupling the coupling element 19, to respectively from the connection piece 17. The control element 19 comprises a cylindrical part 24 which is applied in a perforation 25 of the connection piece 17. The cylindrical part 24 and the perforation 25 are dimensioned in such a manner that upon uncoupling the rotating movement of the control element is not transferred to the connection piece. For this purpose there will be provided that the friction force generated by the friction between the perforation and the control element is smaller than the force necessary for moving the bars.

Coupling and uncoupling is preferably achieved as follows. The coupling piece 18 comprises a number of lips 20, which are provided for meshing in corresponding openings 21 provided in the connection piece 17. In this manner a solid connection between the coupling piece and the connection piece is achieved. The connection piece 18 further comprises a protrusion 22 for meshing in a corresponding hole 23 provided in the control element 19. In this manner a solid connection between the coupling piece and the control element is achieved. The control element 19 is further provided for being pivotally mounted in the perforation 25 provided in the connection element 17.

Upon coupling, the lips of the coupling piece 18 are inserted in the openings 21 of the connection piece 17. At the same time the protrusion 22 of the coupling piece 18 is further inserted in the hole 23 of the control element 19. When the control element 19 is turned, then the rotating movement is transferred from the coupling piece through the intermediary of the hole 23 and protrusion 22. The protrusion 22 comprises a further protrusion 35 which is provided for meshing in a corresponding notch 36, for ensuring the transfer of the rotating movement. The coupling piece 18 transfers on its turn the rotating movement to the connection piece 17 through the intermediary of said lips 20. By turning the connection piece 17, the bars are consequently moved, since they are mounted on the connection piece.

Upon uncoupling, the lips 20 of the coupling piece 18 are removed from the openings 21 of the connection piece 17. Upon turning the control element 19, the rotating movement is transferred to the coupling piece 18, but not any more from the coupling piece to the connection piece, since the coupling piece is not any more solidly connected with the connection piece.

The described coupling and uncoupling of the coupling piece enable thus to anchor the bars in one of said positions. In practice this is used for anchoring the bars, which are used as hinges, in said first position. In this manner, the rotating direction of the door is established. In the bars, which are used as hinges, the coupling piece (hereafter called coupling piece A) is uncoupled. In the bars, which on the contrary are used as closure means, the coupling piece (hereafter called coupling piece B) is coupled. When one wishes to modify the rotating movement of the door, then the door is first opened by turning the control element which is coupled to the connection piece. Further the coupling piece A is coupled and the door is closed again. In a further step, the door is opened in the other rotating direction and coupling piece B is uncoupled.

According to an alternative embodiment, the closure means are anchored in said first position by locking the rotating movement of the closure element in said first position. This is for example achieved by providing the closure means with an opening, wherein a pin is introduced.

Figure 7 illustrates a perspective view of the connection piece 17. The connection points 13 have here the shape of a pin. The first extremities of the bars are then provided with respective eyes for being hingedly connected with those pins. The connection piece 17 further comprises first and second stopping means 29, respectively 30, provided for limiting the movement of the bars between the first and second position. In the first position, the further rotation of the connection piece is hindered by the first stopping means 29, while in said second position the further rotation of the connection piece is hindered by the second stopping means 30.

The coupling piece 18 and the control element 19 preferably comprise respective teeth 31, 32, in such a manner that upon coupling and uncoupling the coupling piece 18, the teeth 31 and 32 mesh in each other. In this way a release of the coupling piece from the control element is avoided, so that the coupling piece, the control element and the connection piece form one entity both in the coupled position wherein coupling piece and connection piece are solidly connected to each other as in the uncoupled position wherein coupling piece and connection piece are no longer solidly connected to each other.

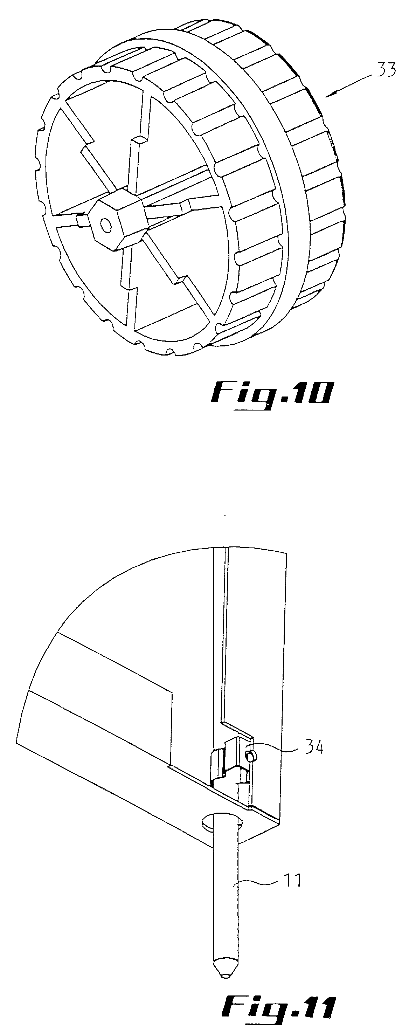

Preferably use is further made of a doorknob 33, as illustrated in figure 10, which is provided for being releasably applied to the control element 19. This enables the user to indicate which bars are used as closure means (figure 1). If desired, the doorknob is screwed to the control element.

As shown in figure 11, an earth clip 34 is provided according to the invention to at least one of the longitudinal sides of the side walls, wherein the earth clip 34 is provided for achieving an electrical contact with one of said bars 11, 12. This bar 11 is on his turn provided for achieving in the first position a first electrical contact with the bottom respectively the top unit. This last electrical contact is preferably achieved by providing each time a further earth clip in the bottom respectively the top unit. According to an alternative embodiment, the further electrical contact is realised by enabling the extremity of the bar touching the bottom unit in the first position. It will be clear that the components achieving the electrical contact must comprise an electrically conductive material for achieving this earthing.

Preferably an earth clip 34 and a further earth clip (not shown) are provided for each bar, in such a manner that each side wall, provided with closure and hinge means according to the invention, is earthed, even if the side wall is open according to one of the possible directions of rotation.

Between the first and the second position (figures 5 and 6), there is a small horizontal displacement of the bars (schematically shown by the double arrow in figure 5) which is the largest at the height of the first extremities and the smallest at the height of the second extremities. In order to keep the play of the bars within the earth clips 34 as low as possible, the earth clips 34 are each time provided at the height of said second extremities of the bars. This corresponds to the providing of the earth clips at the height of the corners of the longitudinal sides of the side walls. In order to reduce the horizontal displacement of the bars, there is provided that the first extremity of the bar 12 which is connected to the connection point 13, which is the most apart from the line formed by the two second extremities of the bars is shifted with respect to the second extremity of the bar.

The choice of material of the earth clips and bars is made in such a manner that corrosion is avoided. For this purpose the bars and the earth clips are for example galvanised or bichromed.

In each of the notches 28 there is preferably provided at the height of the borders 16 a nylon bus (not shown) for attenuating possibly present vibrations, for example generated by the apparatuses and transmitted to the bars.

In a preferred embodiment the door comprises a lock for enabling to lock the cabinet totally. If one wishes for example to open one of the panels which is provided with the hinge and closure means according to the invention, then the door must first be opened for uncoupling one of the coupling pieces provided on the panel. Consequently only the door must be provided with a lock for locking the entire cabinet.

## Claims

1. Cabinet for electrical equipment comprising :
(a) a frame, provided for carrying said electrical equipment;
(b) a housing, comprising a bottom unit, a top unit and side walls, at least one of which side walls forming a door and the other side walls forming panels, which bottom unit and top unit are provided for being mounted on the frame, which door comprises two opposite longitudinal sides, one longitudinal side being provided with hinge means and the other longitudinal side with closure means;
characterised in that said hinge means comprise a first, respectively a second bar, which are provided for meshing in a notch provided in the bottom respectively in the top unit, that said frame, housing and bars, are electrically conductive and that at least one of said longitudinal sides of at least one of said side walls is provided with at least one earth clip, which earth clip is provided for achieving an electrical contact with one of said bars, which on his turn is provided for achieving a further electrical contact with one of the units, bottom or top unit.

2. Cabinet according to claim 1, characterised in that said bottom respectively said top unit are provided with a further earth clip for achieving said further electrical contact.

3. Cabinet according to claim 1 or 2, characterised in that said earth clip is provided at the height of a corner of said longitudinal side.

4. Cabinet according to any one of the preceding claims, wherein at least one of said hinge and closures means comprises a closure element, which closure element comprises two opposite connection points, wherein the one connection point is hingedly connected with a first extremity of a first bar and the other connection point is hingedly connected with a first extremity of a second bar, which bars extend with respect to said closure element in an essentially opposite direction and are movable by means of said closure element between a first and a second position, wherein the second extremity of said first respectively second bar is provided for meshing in said first position in a notch provided in the bottom respectively the top unit and in said second position for being removed from the respective notch.

5. Cabinet according to claim 4, characterised in that said closure element comprises anchoring means for anchoring the bars in said first position.

6. Cabinet according to claim 5, characterised in that said closure element comprises a connection piece which comprises said opposite connection points and that said anchoring means comprise a coupling piece and a control element, wherein said coupling piece is provided for coupling respectively uncoupling the control element to/from said connection piece.

7. Cabinet according to claim 6, characterised in that the coupling piece and the control element are equipped with teeth which are provided for meshing into one another upon said uncoupling.

8. Cabinet according to any one of the claims 4 to 7, characterised in that said closure element comprises stopping means for limiting said displacement between said first and second position.

9. Cabinet according to any one of the claims 4 to 8, characterised in that the first extremity of the first respectively the second bar is shifted with respect to the second extremity of the same bar.
